# EUROPÄISCHE PATENTSCHRIFT

(11) **EP 2 421 388 B1**
(45) Veröffentlichungstag und Bekanntmachung des Hinweises auf die Patenterteilung: **15.05.2013**
(21) Anmeldenummer: 10718070.5
(22) Anmeldetag: 20.04.2010
(51) Int. Cl.: A23L 1/052

(54) **LEBENSMITTELZWISCHENPRODUKT**
FOODSTUFF INTERMEDIATE
PRODUIT INTERMEDIAIRE ALIMENTAIRE

(30) Priorität: 23.04.2009 DE 102009018369
(43) Veröffentlichungstag der Anmeldung: 29.02.2012
(73) Patentinhaber: Herbstreith & Fox KG, Pektin-Fabrik, 75305 Neuenbürg (DE)
(72) Erfinder: FOX, Gerhard, F., 75305 Neuenbürg (DE); ENDRESS, Hans-Ulrich, 75305 Neuenbürg (DE); RENTSCHLER, Christine, 75181 Pforzheim (DE)
(74) Vertreter: Wacker, Jost Oliver
(86) Internationale Anmeldenummer: PCT/EP2010/002397
(87) Internationale Veröffentlichungsnummer: WO 2010/121776

(56) Entgegenhaltungen:
- WO-A1-2005/039317
- DE-A1- 4 226 245
- US-A- 6 149 962
- US-A1- 2006 003 081
- US-B1- 6 455 090

## Beschreibung

Die Erfindung betrifft ein Lebensmittelzwischenprodukt für die Herstellung eines viskosen bis gelierten Lebensmittelproduktes durch Zugabe zu einer Geschmacksbasis und Verarbeitung insbesondere mittels handelsüblicher Haushaltgeräte, wie Küchengeräte für Privathaushalte. Die Geschmacksbasis setzt sich dabei im Wesentlichen aus einem Geschmacksgrundstoff, der beispielsweise aus Früchten, Gemüse, Säften, Milch oder Milchprodukten, alkoholischen Getränken oder einer Kombination derselben besteht, und einer Geschmacksbeigabe zusammen, wie beispielsweise Zucker oder sonstigen Süßungsmitteln, Salz, sonstigen Würzmitteln oder Aromen. Ferner betrifft die Erfindung ein Haushaltsverdickungsmittel zur Herstellung des Lebensmittelzwischenproduktes beziehungsweise ein mittels des Lebensmittelzwischenproduktes hergestelltes Lebensmittelprodukt sowie ein Verfahren zur Herstellung des Lebensmittelproduktes.

Insbesondere zur Herstellung von Marmeladen, Konfitüren, Gelees und sonstigen Fruchtzubereitungen sind Lebensmittelzwischenprodukte mit Haushaltsverdickungsmittel weit verbreitet. Hierbei werden überwiegend Gelierpulver und Gelierzucker verwendet, die sich unter anderem aus Zucker, wie Saccharose oder Fruktose, einem Geliermittel wie Pektin, Carrageen, Xanthan, Johannisbrotkernmehl oder einer Kombination hieraus sowie einem Gelierhilfsmittel zusammensetzen, wie beispielsweise Fruchtsäure oder einer Kombination einer Fruchtsäure und einem Salz einer Fruchtsäure.

Gelierzucker enthalten die für die Fruchtzubereitung erforderliche Gesamtzuckermenge. Bei der Verwendung von Gelierpulvem wird die zur Gelierung erforderliche Zuckermenge gesondert zugegeben.

Gelierzucker und Gelierpulver werden zur haushaltsmäßigen Herstellung von Fruchtzubereitungen für unterschiedliche Trockensubstanzbereiche angeboten. Traditioneller Gelierzucker wird dabei in einem Verhältnis von 1:1 zu der zu verarbeitenden Fruchtmasse verwendet. Darüber hinaus sind auch weitere Gelierzucker im Handel erhältlich, die beispielsweise in einem Verhältnis von 3:1 oder 2:1 der Fruchtmasse zum Gewicht des jeweiligen Gelierzuckers verarbeitet werden. Ferner sind im Handel auch Gelierpulver erhältlich, die mit einer vorgegebenen Zuckermenge vermischt beispielsweise in den Verhältnissen 1:1, 2:1 oder 3:1 von Fruchtmasse zu Gelierpulver-Zucker-Gemisch verarbeitet werden.

In jedem Fall muss der Benutzer das vorgegebene Gewichtsverhältnis zwischen der Fruchtmasse und dem Gelierzucker beziehungsweise dem Gemisch aus Gelierpulver und Zucker relativ genau einhalten, um die gewünschte Konsistenz des endgültigen Lebensmittelproduktes zu erzielen. Eine einfache Vervielfachung der Rezeptur bei gleicher Kochzeit ist bei Gelierzucker beziehungsweise Gelierpulver nicht möglich.

Für die haushaltsmäßige Herstellung von Fruchtzubereitungen für unterschiedliche Trockenmassebereiche werden bei einem zu verarbeitenden hohen Trockenmasseanteil in der Regel hochveresterte Pektine und bei einem zu verarbeitenden niedrigen Trockenmasseanteil in der Regel niederveresterte oder niederveresterte amidierte Pektine als Geliermittel verwendet.

Je nachdem welches Haushaltsverdickungsmittel Verwendung findet, kann dabei nur ein bestimmter Trockenmassebereich abgedeckt werden, der hierbei beispielsweise 50 bis 70 %, 30 bis 50 oder aber 10 bis 40 % bezüglich der Gesamtmasse des Endproduktes beträgt.

Dabei müssen den bekannten Gelierzuckem beziehungsweise Gelierpulvem häufig zusätzlich Pufferstoffe, wie Fruchtsäure oder Salze der Fruchtsäure, zugesetzt werden, um die unterschiedlichen Säuregehalte beziehungsweise Pufferkapazitäten der zu verarbeitenden Fruchtmassen auszugleichen und den für die Gelierung der jeweiligen Geliermittel optimalen Gelierbereich zu erreichen.

Ferner wird bei der Verwendung dieser Gelierzucker oder Gelierpulver-Zucker-Gemische als Lebensmittelzwischenprodukte häufig bereits beim Aufkochen der zu verarbeitenden Geschmacksbasis eine derart hohe Viskosität erreicht, dass es leicht zum Anbrennen oder Spritzen des Produktes kommen kann, was wiederum zu einer schwierigen beziehungsweise unkomfortablen Verarbeitung führt.

Das anlässlich des Kongresses "Dietary Fibre 2000" vom 13. bis 18. Mai 2000 in Dublin veröffentlichte Poster "Functional Properties of Herbacel AQ Plus Fruit Fibres" der Herbafood Ingredients GmbH, D-14542 Werder beschreibt die Eigenschaften der unter dem Namen "Herbacel AQ Plus" vertriebenen unlöslichen Fruchtfasem. Zur demonstrativen Darstellung der Geliereigenschaften der besagten Fasern ist hierbei ein Orangensaft-Gemisch mit einem 2%igen Anteil der Fasern in einem homogenisierten und einem nicht homogenisierten Zustand dargestellt.

EP 1 458 244 B1 beschreibt einen Kit für die Instant-Herstellung einer streichfähigen Wasser und Öl umfassenden Emulsion. Der Kit weist dabei in einer separaten Verpackungseinheit eine Ölphase auf, die ein kalt hydratisierendes Verdickungsmittel umfasst. Als Zusatz oder Alternative zu dem kalt hydratisierenden Verdickungsmittel sind dabei auch unlösliche Pflanzenfasern entsprechend dem unter der Bezeichnung "Herbacel AQ Plus" vertriebenen Produkt vorgesehen.

WO 2005/039317 A1 beschreibt ein Lebensmittelprodukt, wie Dressing, welches unlösliche Fasern (Herbacel Citrus Fiber), Basisflüssigkeit (Wasser, Sonnenblumenöl), Geschmacksbasis (Aroma/Gewürze) enthält und über gute sensorische Eigenschaften verfügt.

Aus der Firmenschrift "Konfitüren 55°Brix" der Herbstreith & Fox Unternehmensgruppe, D-75305 Neuenbürg sind mehrere Rezepturen für Fruchtzubereitungen unter Verwendung einer Pektinlösung zu entnehmen.

Aus der Firmenschrift "Verbesserte Fruchtfasem für die moderne Lebensmittelverarbeitung" der Herbafood Ingredients GmbH, D-14542 Werder ist eine Rezeptur für ein Erdbeersorbet bekannt, bei dem die unter der Bezeichnung "Herbacel AQ Plus" vertriebene Zitrusfaser mit einem Anteil von 1% verwendet wird.

Aus der Firmenschrift "Fruit and More" der Herbafood Ingredients GmbH, D-14542 Werder, erschienen in "Flüssiges Obst"05/2002 ist eine Rezeptur für ein ballaststoffhaltiges Dessert zu entnehmen, das einen 2%igen Anteil an der unter der Bezeichnung "Herbacel AQ Plus" vertriebenen unlöslichen Zitrusfaser enthält.

Der Artikel "Structuring of Low Calorie Food with Fruit Fibres" von Fischer, J. in "Gums and Stabilisers for the Food Industriy 14" veröffentlicht in "RSC Publishing" der Royal Society of Chemistry in 2008 beschreibt die Vorbehandlung der unter der Bezeichnung "AQ plus" vertriebenen unlöslichen Zitrusfaser durch Dispersion in Wasser unter gleichzeitiger Beaufschlagung mit Scheerkräften.

Die am 22.12.2008 von der Firma Hawkins Watts Australia Pty Ltd im Internet veröffentlichte Information zeigt eine Rezeptur sowie ein Verfahren zur Herstellung einer Marmelade, deren Ballaststoffe überwiegend durch Pektine gebildet sind.

Die Aufgabe der Erfindung ist es, ein Lebensmittelzwischenprodukt bereit zu stellen, das die genannten Nachteile vermeidet und das eine einfachere und flexiblere haushaltsmäßige Herstellung von Lebensmittelprodukten ermöglicht.

Diese Aufgabe wird durch ein Lebensmittelzwischenprodukt mit den Merkmalen des Anspruchs 1 gelöst. Dabei enthält das Lebensmittelzwischenprodukt ein Haushaltsverdickungsmittel, das einen Ballaststoff aus insbesondere überwiegend unlöslichen Pflanzenfasern aufweist, wie er beispielsweise in WO 01/17376 A1 beschrieben ist. Zudem ist das Haushaltsverdickungsmittel mit Flüssigkeit, wie insbesondere Wasser, Milch oder Saft, vermengt. Der Ballaststoff ist dabei in einer Ballaststoffmenge von 0,1 bis 10,0 Gew.-% bezogen auf das Gewicht der Flüssigkeit vorgesehen. Das Lebensmittelzwischenprodukt liegt hierbei vorportioniert in einer pastösen Konsistenz vor. Ein derartiges Lebensmittelzwischenprodukt ermöglicht dabei eine sehr variable Auswahl hinsichtlich des Mengenanteils der zu verarbeitenden Geschmacksbasis und insbesondere hinsichtlich des darin enthaltenen Mengenverhältnisses zwischen dem Geschmacksgrundstoff und der Geschmacksbeigabe, wie insbesondere Zucker. Dabei ist es einfach möglich, die Rezeptur zu Vervielfältigen. Zudem können insbesondere mit ein und demselben Lebensmittelzwischenprodukt unterschiedliche Lebensmittelprodukte hergestellt werden, deren Trockenmasse bezogen auf das Gesamtgewicht des Lebensmittelproduktes zwischen 5 und 70 % liegen kann. Auf diese Weise ist es auch im privaten Haushalt bei einer Vielzahl von herzustellenden Produkten möglich, je nach Wunsch beispielsweise eher süße oder eher fruchtige oder auch gänzlich ungesüßte Lebensmittelprodukte in einfacher Weise mit einer gewünschten Konsistenz herzustellen, wie insbesondere bei Fruchtzubereitungen. Dies kann dabei bei allen vorgesehenen Produkten unter Verwendung lediglich eines Lebensmittelzwischenproduktes erreicht werden. Das Lebensmittelzwischenprodukt kann dabei in der pastösen Konsistenz bereits fertig vorportioniert abgepackt sein oder durch Vermengung des vorportioniert abgepackten Haushaltsverdickungsmittels mit einer angegebenen Flüssigkeitsmenge besonders einfach hergestellt werden. Auf diese Weise wird das Lebensmittelzwischenprodukt in einer fertig verwendbaren Form bereitgestellt und kann dadurch besonders komfortabel verarbeitet werden.

Zudem kann ein derartiges Lebensmittelzwischenprodukt unabhängig von einem Kochvorgang einfach in die jeweilige Geschmacksbasis eingerührt werden, um dieser die gewünschte Konsistenz zu geben. Somit kann die Geschmacksbasis beispielsweise bei der Herstellung von Marmelade zunächst ohne das Haushaltsverdickungsmittel aufgekocht und erst nach dem Kochvorgang mit demselben vermengt werden, wodurch die Gefahr des Überkochens, Anbrennens oder Spritzens in Folge einer zu hohen Viskosität während des Aufkochens vermindert wird.

Ferner ist es auch möglich, das Lebensmittelzwischenprodukt kalt einzurühren und dadurch beispielsweise Fruchtzubereitungen oder Fruchtsorbets ohne jeglichen Kochvorgang herzustellen.

Bei einer besonders bevorzugten Ballaststoffmenge im Lebensmittelzwischenprodukt, der zwischen 1,0 und 7,0 Gew.-% bezogen auf das Gewicht der Flüssigkeit liegt, kann dabei eine gewünschte Konsistenz des herzustellenden Lebensmittelproduktes besonders zuverlässig erzielt werden.

Zudem ist es günstig, wenn die Flüssigkeit und der Ballaststoff durch die Aufbringung von Scherkräften verarbeitet sind. Auf diese Weise kann das Quellvermögen des Ballaststoffes weiter erhöht und die pastöse Konsistenz hergestellt werden, was wiederum eine glattere Struktur des herzustellenden Lebensmittelproduktes ermöglicht. Hierdurch wird beim Verzehr desselben ein angenehmes Gefühl im Mund erzeugt.

In einer besonders vorteilhaften Ausführungsform ist der Ballaststoff aus Frucht-, Gemüse- und/oder Getreidefasern, wie insbesondere unlösliche Citrus- und/oder Apfelfasern, gebildet. Hierdurch kann der Ballaststoff beziehungsweise das Haushaltsverdickungsmittel ein besonders hohes Wasserbindevermögen aufweisen.

Zudem kann es vorteilhaft sein, wenn dem Lebensmittelzwischenprodukt neben dem durch Frucht-, Gemüse- und/oder Getreidefasem gebildeten Ballaststoff des Haushaltsverdickungsmittels wenigstens ein gegenüber den Pflanzenfasern unterschiedlicher Ballaststoff beigegeben ist, der beispielsweise durch lösliche Ballaststoffe gebildet sein kann, wie insbesondere Pektin oder Inulin. Auf diese Weise kann eine zusätzliche Ballaststoffanreicherung des herzustellenden Lebensmittelproduktes erreicht werden.

Vorteilhafterweise ist dem Lebensmittelzwischenprodukt zudem ein Konservierungsstoff beigegeben. Dieser kann dabei derart bemessen sein, dass er die Haltbarmachung allein des Lebensmittelzwischenproduktes gewährleistet. Alternativ ist es aber auch möglich den Konservierungsstoff in einer derartigen Menge vorzusehen, dass er auch zur Haltbarmachung des gesamten Lebensmittelproduktes geeignet ist, für dessen Herstellung das Lebensmittelzwischenprodukt vorgesehen ist.

Ferner wird die Aufgabe durch ein Lebensmittelprodukt gelöst, das unter Verwendung des Lebensmittelzwischenproduktes in einer der oben genannten Ausführungsformen hergestellt ist. Das Lebensmittelprodukt weist dabei einen Geschmacksgrundstoff auf, der überwiegend durch Früchte, Gemüse, Säfte, Milch oder Milchprodukte oder alkoholische Getränke, wie Bier, Wein oder Sekt, oder Kombinationen hieraus gebildet ist. Ferner ist eine Geschmacksbeigabe vorgesehen, die durch Süßungsmittel, wie insbesondere Zucker, Fruktose, SaccharoseoderHnig, oder sonstige Würzmittel, wie Aromen oder Gewürze gebildet ist. Somit ist die haushaltsmäßige Herstellung einer Vielzahl von Lebensmittelprodukten mit einer gewünschten Konsistenz möglich.

Dabei ist es günstig, wenn der Geschmacksgrundstoff durch eine Fruchtmasse und die Geschmacksbeigabe durch Zucker gebildet ist, wodurch das Lebensmittelprodukt eine Fruchtzubereitung, wie Marmelade, Konfitüre, Fruchtaufstrich oder Fruchtgelee, bildet, deren Konsistenz besonders gut einstellbar ist.

Vorteilhafterweise weist das Lebensmittelprodukt einen Gehalt von 20 bis 40 Gew.-% des Lebensmittelzwischenproduktes, 30 bis 80 Gew.-% des Geschmacksgrundstoffes und 0 bis 50 Gew.-% der Geschmacksbeigabe auf. Bei diesen Gewichtsanteilen ist eine besonders gute Ausbildung der gewünschten Konsistenz des Lebensmittelproduktes möglich.

Dabei ist es insbesondere günstig, wenn der Ballaststoff und der Zusatzballaststoffe einen Gesamtgehalt von wenigstens 3 Gew-% aufweisen, wobei auch ausschließlich der Ballaststoff vorgesehen sein kann. In jedem Fall erhält man hierdurch ein Lebensmittelprodukt, das als "mit Ballaststoff angereichet" gilt.

In einer weiteren vorteilhaften Ausführungsform sind Zusatzstoffe, wie beispielsweise Konservierungsstoffe mit einem Gehalt von maximal 1 Gew.-% beigegeben, um insbesondere die Haltbarkeit des Lebensmittelproduktes zu verbessern. Auf die Zugabe von Pufferstoffen, wie insbesondere Fruchtsäuren oder Salze aus Fruchtsäuren, kann dagegen vollständig verzichtet werden. Eine Beigabe von Pufferstoffen beispielsweise aus geschmacklichen Gründen ist jedoch möglich. Die Aufgabe wird ferner durch ein Verfahren zur Herstellung des Lebensmittelproduktes in einer der oben genannten Ausführungsformen gelöst. Bei diesem werden in einem ersten Schritt der Geschmacksgrundstoff und die Geschmacksbeigabe zu der Geschmacksbasis vermengt. Ferner ist das Haushaltsverdickungsmittel in trockener Form vorportiniert abgepackt, um mit der Flüssigkeit, wie insbesondere Wasser, Milch oder Saft, in einem vorgegebenen Gewichtsverhältnis vermengt werden zu können. Die hinsichtlich der vorportionierten Menge des Haushaltsverdickungsmittels hierfür geeignete Menge der Flüssigkeit ist dabei auf der Verpackung angegeben. Hierdurch kann auch das Lebensmittelzwischenprodukt selbst in einfacher Weise haushaltsmäßig hergestellt werden, wie insbesondere unter Verwendung von handelsüblichen Haushaltsgeräten. Zudem ist es hierbei möglich, das Haushaltsverdickungsmittel auch direkt mit einer zu verarbeitenden Fruchtmasse zu vermengen, insbesondere ohne es vorher mit Flüssigkeit zu einer pastösen Konsistenz zu verarbeiten. Die hierfür geeignete Menge der Fruchtmasse kann dabei ebenfalls angegeben sein. Zudem ist es günstig, wenn die vorportionierte Menge des Haushaltsverdickungsmittels in streufähiger Form abgepackt ist. Die streufähige Konsistenz ermöglicht dabei sowohl eine einfache Vorportionierung als auch eine gute Handhabbarkeit bei der Verarbeitung des Haushaltsverdickungsmittels. In einem nachfolgenden Schritt wird das vorportionierte Lebensmittelzwischenprodukt in die Geschmacksbasis eingerührt. Durch diese Verwendung des vorportionierten Lebensmittelzwischenproduktes ist eine besonders einfache Herstellung der verschiedenen Rezepturen möglich, um eine gewünschte Konsistenz des herzustellenden Lebensmittelproduktes erzielen zu können. Dabei ist es günstig, wenn vor Einrühren des Lebensmittelzwischenproduktes dieses durch Vermengen des Haushaltsverdickungsmittels mit Flüssigkeit in einem vorgegebenen Mischungsverhältnis hergestellt wird und durch Beaufschlagung beispielsweise mittels eines handelsüblichen Haushaltsgerätes in Form eines Rühr-, Mix- oder Schneidgerätes oder mittels Homogenisator vorbehandelt wird. Auf diese Weise kann ein besonders hohes Quellvermögen des Lebensmittelzwischenproduktes erreicht werden.

Ferner ist es vorteilhaft, wenn nach dem ersten Schritt die Geschmacksbasis in einem nachfolgenden Schritt gekocht wird, um unter anderem den Zucker vollständig zu lösen und eine gewisse Haltbarkeit zu gewährleisten.

Vorteilhafterweise wird nach dem Einrühren des Lebensmittelzwischenproduktes in die Geschmacksbasis in einem nachfolgenden Schritt eine Haltbarmachung vorgenommen, um die Lagerungsfähigkeit des Lebensmittelproduktes zu verbessern.

Günstig ist es ferner, wenn zur Haltbarmachung ein Konservierungsmittel zugegeben wird, wodurch die Haltbarmachung besonders einfach und schnell durchführbar ist.

Zudem ist es vorteilhaft, wenn das Lebensmittelprodukt zur Haltbarmachung kurzzeitig erhitzt wird, wodurch eine Haltbarmachung ohne die Zugabe von naturfremden Stoffen möglich ist.

Im Folgenden werden beispielhafte Rezepturen für das erfindungsgemäße Lebensmittelzwischenprodukt beziehungsweise Lebensmittelprodukt unter Verwendung des Haushaltsverdickungsmittels angegeben:

### 1) Lebensmittelzwischenprodukt

| | |
|---|---|
| 20g | des Ballaststoffes gemäß WO 01/17376 (beispielsweise "Herbacel AQ Plus Citrusfaser" der Firma Herbstreith & Fox KG Pektin-Fabriken) und gegebenenfalls eines löslichen Zusatzballaststoffes |
| 300g | Wasser |

Das Lebensmittelzwischenprodukt kann dabei in anwendungsbereiter pastöser Form abgepackt sein, wobei der Ballaststoff und die Flüssigkeit in Form von Wasser durch Beaufschlagung von Scherkräften vorbehandelt sein können. Neben den angegebenen Mengen kann das Lebensmittelzwischenprodukt beziehungsweise das Haushaltsverdickungsmittel selbstverständlich auch in anderen haushaltsgerechten Mengen vorportioniert sein. Zudem kann eine Haltbarmachung durch Konservierungsstoffe, Pasteurisierung, Erhitzung oder jeder sonstigen bekannten und geeigneten Art vorgesehen sein.

Alternativ kann das Haushaltsverdickungsmittel im trockenen Zustand und somit in streufähiger Form abgepackt sein, um durch Vermengen beispielsweise mit Wasser zum Lebensmittelzwischenprodukt verarbeitet oder direkt mit der zu verarbeitenden Geschmacksbasis vermengt werden zu können. Die Verpackung sollte in diesem Fall angeben, in welchem Verhältnis beziehungsweise mit welcher Menge an Wasser das Haushaltsverdickungsmittel zu vermengen ist, um das Lebensmittelzwischenprodukt herzustellen. Ferner kann auf eine Vorbehandlung des Gemisches mittels eines Rühr-, Mix- oder Schneidegerätes hingewiesen werden, um die Eigenschaften des Lebensmittelzwischenproduktes zu verbessern.

### 2) Lebensmittelprodukt in Form einer Fruchtzubereitung

| | |
|---|---|
| 320g | des Lebensmittelzwischenproduktes |
| 400g | Fruchtmasse |
| 400g | Zucker |

Der Herstellungsprozess ist wie folgt:

Die Fruchtmasse als Geschmacksgrundstoff wird mit dem Zucker als Geschmacksbeigabe vermengt und wenigstens 3 min. lang gekocht. Anschließend wird das Lebensmittelzwischenprodukt gemäß Punkt 1) zugegeben und etwa 1 Minute lang eingerührt. Zur besseren Haltbarmachung können Zusatzstoffe, wie beispielsweise Konservierungsstoffe beigegeben werden, die einen maximalen Anteil von 1,0 Gew.-% des Lebensmittelproduktes aufweisen. Alternativ oder zusätzlich kann das Lebensmittelprodukt ein weiteres Mal, beispielsweise auf einem Herd oder in einer Mikrowelle erhitzt werden, um eine gewünschte Mindesthaltbarkeit zu gewährleisten. Im Anschluss hieran kann das Lebensmittelprodukt dann abgefüllt werden.

### 3) Lebensmittelprodukt in Form eines Fruchtsorbets

| | |
|---|---|
| 320g | des Lebensmittelzwischenproduktes |
| 800g | Fruchtpüree |
| 200g | Zucker |

Der Herstellungsprozess ist wie folgt:

Das Fruchtpüree als Geschmacksgrundstoff wird mit dem Zucker als Geschmacksbeigabe zu einer Geschmacksbasis gemischt. Anschließend erfolgt eine kurze Verweildauer während der sich der Zucker auflösen kann. Alternativ oder zusätzlich hierzu kann die Geschmacksbasis hierbei auch erhitzt werden. Anschließend wird das Lebensmittelzwischenprodukt gemäß Punkt 1) vorzugsweise kalt untergerührt. Im nächsten Schritt wird das hierbei entstandene Gemisch auf eine Temperatur von etwa -10°C abgekühlt, wodurch ein Lebensmittelprodukt in Form eines Fruchtsorbets gewonnen wird. Dieses kann darauf hin zur Haltbarmachung tiefgekühlt gelagert werden.

Eine entsprechende oder ähnliche Rezeptur und Herstellungsweise des Lebensmittelproduktes unter Verwendung des erfindungsgemäßen Haushaltsverdickungsmittels gemäß Punkt 2) oder 3) ist neben der auf einer Fruchtmasse basierenden Geschmacksbasis auch für alle anderen vorgesehenen Geschmacksgrundstoffe, wie Gemüse, Säfte, Milch oder Milchprodukte, alkoholische Getränke oder Kombinationen hieraus beziehungsweise für alle anderen vorgesehenen Geschmacksbeigaben, wie Salze oder sonstige Würzmittel, möglich.

## Patentansprüche

1. Lebensmittelzwischenprodukt für die Herstellung eines viskosen bis gelierten Lebensmittelproduktes durch Zugabe zu einer Geschmacksbasis und Verarbeitung mittels handelsüblicher Haushaltgeräte,
mit einem Haushaltsverdickungsmittel, das einen Ballaststoff aus überwiegend unlöslichen Pflanzenfasern aufweist und mit Wasser, Milch oder Saft, vermengt ist,
wobei der Ballaststoff in einer Ballaststoffmenge vorgesehen ist, die 0,1 bis 10 Gew.-% der Flüssigkeit beträgt, und
das Lebensmittelzwischenprodukt in einer pastösen Konsistenz vorportioniert abgepackt ist.

2. Lebensmittelzwischenprodukt nach Anspruch 1, **dadurch gekennzeichnet, dass** die Ballaststoffmenge des Ballaststoffes 1,0 bis 7,0 Gew-% der Flüssigkeit beträgt.

3. Lebensmittelzwischenprodukt nach Anspruch 1 oder 2, **dadurch gekennzeichnet, dass** die Flüssigkeit und der Ballaststoff durch die Aufbringung von Scherkräften vorbehandelt sind.

4. Lebensmittelzwischenprodukt nach einem der Ansprüche 1 bis 3, **dadurch gekennzeichnet, dass** der Ballaststoff aus Pflanzenfasern, wie Frucht-, Gemüse- und/oder Getreidefasem gebildet ist.

5. Lebensmittelzwischenprodukt nach Anspruch 4, **dadurch gekennzeichnet, dass** zusätzlich wenigstens ein gegenüber den Pflanzenfasern unterschiedlicher Zusatzballaststoff beigegeben ist.

6. Lebensmittelzwischenprodukt nach einem der Ansprüche 1 bis 5, **dadurch gekennzeichnet, dass** ein Konservierungsstoff beigegeben ist.

7. Lebensmittelprodukt das unter Verwendung des Lebensmittelzwischenproduktes nach einem der Ansprüche 1 bis 6 hergestellt ist, **dadurch gekennzeichnet, dass** die Geschmacksbasis
einen Geschmacksgrundstoff, der überwiegend durch Früchte, Gemüse, Milch oder Milchprodukte, Säfte oder alkoholische Getränke, wie Bier, Wein oder Sekt, oder Kombinationen hieraus gebildet ist, sowie
eine Geschmacksbeigabe, die durch Süßungs- oder Würzmittel oder Aromen gebildet ist, aufweist.

8. Lebensmittelprodukt nach Anspruch 7, **dadurch gekennzeichnet, dass** der Geschmacksgrundstoff durch eine Fruchtmasse und die Geschmacksbeigabe durch Zucker gebildet ist.

9. Lebensmittelprodukt nach Anspruch 7 oder 8, **dadurch gekennzeichnet, dass** ein Gehalt von:
| | | | | |
|---|---|---|---|---|
| 20 | bis | 40 | Gew.-% | des Lebensmittelzwischenproduktes |
| 30 | bis | 80 | Gew.-% | des Geschmacksgrundstoffes und |
| 0 | bis | 50 | Gew.-% | der Geschmacksbeigabe |
vorgesehen ist.

10. Lebensmittelprodukt nach einem der Ansprüche 7 bis 9, **dadurch gekennzeichnet, dass** der Ballaststoff und der Zusatzballaststoff einen Gesamtgehalt von wenigstens 3 Gew-% aufweisen.

11. Lebensmittelprodukt nach einem der Ansprüche 7 bis 10, **dadurch gekennzeichnet, dass** Zusatzstoffe mit einem Gehalt von maximal 1 Gew.-% beigegeben sind.

12. Verfahren zur haushaltsmäßigen Herstellung eines Lebensmittelproduktes nach einem der Ansprüche 7 bis 11, bei dem:
in einem ersten Schritt der Geschmacksgrundstoff und die Geschmacksbeigabe zu der Geschmacksbasis vermengt werden und
das Lebensmittelzwischenprodukt durch Vermengen eines Haushaltsverdickungsmittels mit Flüssigkeit in einem vorgegebenen Mischungsverhältnis hergestellt wird, wobei das Haushaltsverdickungsmittel zur Verwendung mit der Flüssigkeit in einem vorgegebenen Gewichtsverhältnis, mit einem entsprechenden Gewicht in trockener Form und unter Angabe einer zu verwendenden Flüssigkeitsmenge in einer vorportionierten Menge in streufähiger Form abgepackt ist, und
das Lebensmittelzwischenprodukt durch Beaufschlagung mittels eines Rühr-, Mix- oder Schneidgerätes beziehungsweise mittels eines Homogenisators, vorbehandelt wird und
in einem nachfolgenden Schritt das vorportionierte Lebensmittelzwischenprodukt in die Geschmacksbasis eingerührt wird.

13. Verfahren nach Anspruch 12, **dadurch gekennzeichnet, dass** nach dem ersten Schritt die Geschmacksbasis in einem nachfolgenden Schritt gekocht wird.

14. Verfahren nach einem der Ansprüche 12 bis 13, **dadurch gekennzeichnet, dass** nach dem Einrühren des Lebensmittelzwischenproduktes in die Geschmacksbasis in einem nachfolgenden Schritt eine Haltbarmachung vorgenommen wird.

15. Verfahren nach Anspruch 14, **dadurch gekennzeichnet, dass** zur Haltbarmachung ein Konservierungsmittel zugegeben wird.

16. Verfahren nach Anspruch 14 oder 15, **dadurch gekennzeichnet, dass** das Lebensmittelprodukt zur Haltbarmachung erhitzt wird.

## Claims

1. Foodstuff intermediate for producing a viscous to gelled foodstuff product by adding said intermediate to a flavour base and by processing using conventional household appliances,
with a household thickening agent with roughage which contains predominantly insoluble vegetable fibre, mixed with water, milk or juice,
whereby the roughage is provided at a roughage quantity of 0.1 to 10% by weight of the liquid, and
the foodstuff intermediate is packed into portions in a paste-like consistency.

2. Foodstuff intermediate according to claim 1 **characterised in that** the roughage quantity is 1.0 to 7.0% by weight of the liquid.

3. Foodstuff intermediate according to claim 1 or 2 **characterised in that** the liquid and the roughage are pretreated by the application of shearing forces.

4. Foodstuff intermediate according to any one of claims 1 to 3 **characterised in that** the roughage is composed of vegetable fibres, such as fruit, vegetable and / or cereal fibres.

5. Foodstuff intermediate according to claim 4 **characterised in that** in addition to at least one additional roughage material other vegetable fibres is added.

6. Foodstuff intermediate according to any one of claims 1 to 5 **characterised in that** a preservative is added.

7. Foodstuff product which is produced using the foodstuff intermediate according to any one of claims 1 to 6 **characterised in that** the flavour base is a flavour base material which is composed predominantly of fruit, vegetables, milk or milk products, juices or alcoholic drinks such as beer, wine or sparkling wine, or combinations thereof, and
contains a flavour additive composed of sweetening or spicing agents or flavours.

8. Foodstuff product according to claim 7 **characterised in that** the flavour base material is formed by a fruit mass and the flavour additive by sugar.

9. Foodstuff product according to claim 7 or 8 **characterised in that** a content of:
20 to 40% by weight of the foodstuff intermediate
30 to 80% by weight of the flavour base material and
0 to 50% by weight of the flavour additive
is provided.

10. Foodstuff product according to any one of claims 7 to 9 **characterised in that** the roughage and the additional roughage have a total content of at least 3% by weight.

11. Foodstuff product according to any one of claims 7 to 10 **characterised in that** additives are added with a content of at most 1% by weight.

12. Method for the domestic production of a foodstuff product according to any one of claims 7 to 11, whereby:
in a first step, the flavour base material and the flavour additive are added to the flavour base and
the foodstuff intermediate is produced by adding a household thickening agent with liquid at a specified mix ratio, whereby the household thickening agent for use with the liquid at a specified weight ratio, with a corresponding weight in dry form and with data on a quantity of liquid to be used is packed in a pre-portioned quantity in a scatter-ready form, and
the foodstuff intermediate is pre-treated by application of force by means of a stirring, mixing or cutting appliance or by means of a homogeniser, and
in a subsequent step the pre-portioned foodstuff intermediate is stirred into the flavour base.

13. Method according to claim 12 **characterised in that** after the first step the flavour base is boiled in a subsequent step.

14. Method according to any one of claims 12 to 13 **characterised in that** after stirring the foodstuff intermediate into the flavour base, in a subsequent step a preservation operation is carried out.

15. Method according to claims 14 **characterised in that**, for preservation purposes, a preservative is added.

16. Method according to claim 14 or 15 **characterised in that**, for preservation purposes, the foodstuff product is heated.

## Revendications

1. Produit intermédiaire alimentaire pour la production d'un produit alimentaire allant de visqueux à gélifié par addition à une base d'arôme et transformation au moyen d'un ustensile ménager disponible dans le commerce,
qui est mélangé avec un épaississant domestique, qui comprend des fibres alimentaires comportant essentiellement des fibres végétales insolubles et avec de l'eau, de lait ou du jus,
dans lequel les fibres alimentaires sont prévues dans une quantité desdites fibres alimentaires qui représente de 0,1 à 10 % en poids du liquide et
dans lequel le produit intermédiaire alimentaire de consistance pâteuse est emballé en portions.

2. Produit intermédiaire alimentaire selon la revendication 1, **caractérisé en ce que**, la quantité de fibres desdites fibres alimentaires représente 1,0 à 7,0 % en poids du liquide.

3. Produit intermédiaire alimentaire selon la revendication 1 ou 2, **caractérisé en ce que** le liquide et les fibres alimentaires sont traités par l'application d'une force de cisaillement.

4. Produit intermédiaire alimentaire selon l'une des revendications 1 à 3, **caractérisé en ce que**, les fibres alimentaires sont formées de fibres végétales, comme les fibres de fruits, de légumes et/ou de céréales.

5. Produit intermédiaire alimentaire selon la revendication 4, **caractérisé en ce qu'**en outre, au moins une fibre alimentaire additionnelle, différente des fibres végétales, est ajoutée.

6. Produit intermédiaire alimentaire selon l'une des revendications 1 à 5, **caractérisé en ce qu'**un conservateur est ajouté.

7. Produit alimentaire qui est fabriqué en utilisant le produit intermédiaire alimentaire selon l'une des revendications 1 à 6, **caractérisé en ce que**, la base d'arôme
comprend une matière première d'arôme qui est formée majoritairement de fruits, de légumes, de lait ou de produits laitiers, de jus ou de boissons alcoolisées comme de la bière, du vin ou du champagne ou de combinaisons de ceux-ci, ainsi qu'
un additif de goût formé par des édulcorants, des condiments ou des arômes.

8. Produit alimentaire selon la revendication 7, **caractérisé en ce que**, la matière première d'arôme est formée d'un résidu de fruits et l'additif de goût est formé de sucre.

9. Produit alimentaire selon la revendication 7 ou 8, **caractérisé en ce qu'**il contient :
20 à 40 % en poids de produit intermédiaire alimentaire
30 à 80 % en poids de matière première d'arôme et
0 à 50 % en poids d'additif de goût.

10. Produit alimentaire selon l'une des revendications 7 à 9, **caractérisé en ce que** les fibres alimentaires et les fibres alimentaires additionnelles représentent ensemble une teneur d'au moins 3 % en poids.

11. Produit alimentaire selon l'une des revendications 7 à 10, **caractérisé en ce que**, les additifs sont ajoutés en une quantité d'au maximum 1 % en poids.

12. Procédé de fabrication de type domestique d'un produit alimentaire selon l'une des revendications 7 à 11 par lequel :
dans une première étape la matière première d'arôme et l'additif de goût sont mélangés pour donner la base d'arôme, et
le produit alimentaire intermédiaire est fabriqué en mélangeant un épaississant domestique avec le liquide dans des proportions de mélange prédéfinies, ledit épaississant domestique étant, pour son utilisation avec le liquide dans une proportion massique prédéfinie, emballé en portion, sous un forme capable de diffusé, avec un poids correspondant sous forme sèche et en indiquant la quantité de liquide à utiliser, et
ledit produit alimentaire intermédiaire est traité par mélange au moyen d'un appareil pour agiter, pour mélanger ou pour cisallier, en particulier au moyen d'un homogénéisateur et ensuite une étape dans laquelle le produit alimentaire intermédiaire préproportionné est mélangé avec la base d'arôme.

13. Procédé selon la revendication 12, **caractérisé en ce qu'**après la première étape, la base d'arôme est cuite dans une étape subséquente.

14. Procédé selon l'une des revendications 12 à 13, **caractérisé en ce qu'**après le mélange du produit alimentaire intermédiaire dans la base d'arôme, une préservation est réalisée dans une étape subséquente.

15. Procédé selon la revendication 14, **caractérisé en ce que** pour la préservation un conservateur est ajouté.

16. Procédé selon l'une des revendications 14 ou 15, **caractérisé en ce que**, pour la préservation, le produit alimentaire est chauffé.
